(19) **Europäisches Patentamt**
**European Patent Office**
**Office européen des brevets**

(11) **EP 3 357 717 B2**

(12) ## NEUE EUROPÄISCHE PATENTSCHRIFT
Nach dem Einspruchsverfahren

(45) Veröffentlichungstag und Bekanntmachung des Hinweises auf die Entscheidung über den Einspruch:
**22.11.2023 Patentblatt 2023/47**

(45) Hinweis auf die Patenterteilung:
**04.12.2019 Patentblatt 2019/49**

(21) Anmeldenummer: **18150921.7**

(22) Anmeldetag: **02.11.2012**

(51) Internationale Patentklassifikation (IPC):
**B60D 1/06** (2006.01) **B60D 1/62** (2006.01)
**B60D 1/24** (2006.01)

(52) Gemeinsame Patentklassifikation (CPC):
**B60D 1/248; B60D 1/06; B60D 1/62**

(54) **ANHÄNGEKUPPLUNG MIT EINER AUSWERTEEINRICHTUNG**

DRAW BAR WITH AN EVALUATION DEVICE

ATTELAGE DOTÉ D'UN DISPOSITIF D'ÉVALUATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2011 DE 102011117518**

(43) Veröffentlichungstag der Anmeldung:
**08.08.2018 Patentblatt 2018/32**

(60) Teilanmeldung:
**19204002.0 / 3 698 993**

(62) Dokumentnummer(n) der früheren Anmeldung(en) nach Art. 76 EPÜ:
**14001086.9 / 2 767 418**
**12007470.3 / 2 589 504**

(73) Patentinhaber: **WESTFALIA - Automotive GmbH 33378 Rheda-Wiedenbrück (DE)**

(72) Erfinder:
• **Sielhorst, Bernhard**
  **33378 Rheda-Wiedenbrück (DE)**
• **Kramer, Ulrich**
  **33602 Bielefeld (DE)**
• **Pascher, Nikolas**
  **33335 Gütersloh (DE)**
• **Stockhaus, Tim**
  **33613 Bielefeld (DE)**

(74) Vertreter: **Patentanwälte Bregenzer und Reule Partnerschaftsgesellschaft mbB Neckarstraße 47 73728 Esslingen (DE)**

(56) Entgegenhaltungen:
EP-A1- 1 475 253        EP-A1- 2 316 669
DE-A1- 2 619 913        DE-A1- 3 833 418
DE-A1- 10 027 573       DE-A1- 19 749 544
DE-A1- 19 810 378       DE-A1- 19 859 961
DE-A1-102009 046 179    GB-B- 2 348 508
NL-C1- 1 024 538        US-A1- 2010 332 049
US-B1- 6 196 327        US-B1- 6 705 684

**EP 3 357 717 B2**

**Beschreibung**

Die Erfindung betrifft eine Anhängekupplung für ein Zugfahrzeug, gemäß dem Oberbegriff des Anspruch 1.

Eine derartige Anhängekupplung ist beispielsweise in US 2010/0332049 A1 erläutert.

Aus DE 10 2010 009 986 A1 ist eine Anhängekupplung für ein Zugfahrzeug bekannt, bei der der kugelförmige Kuppelkörper beweglich an einem Kupplungsarm gelagert ist, wobei ein Kraftsensor die Stützlast, die einen dem Kuppelelement, nämlich der Kupplungskugel, angreift, misst. Ferner wird vorgeschlagen, mittels eines anderen Kraftsensors eine Zuglast, die an der Kupplungskugel angreift, auch zu messen.

Bei dieser Anhängekupplung sind also die Stützlast und eine Zuglast, die beim Zugbetrieb des Gespanns auftritt, erfassbar. Für einen sicheren Fahrbetrieb ist es vorteilhaft, wenn eine Stützlast richtig erfassbar und einstellbar ist. Ferner darf auch die Masse oder das Gesamtgewicht des Anhängers nicht überschritten werden.

Es ist daher die Aufgabe der vorliegenden Erfindung, Vorrichtungen und Verfahren anzugeben, um einen Anhänger-Massewert des Anhängers zu ermitteln.

Zur Lösung dieser Aufgabe ist eine Anhängekupplung gemäß der technischen Lehre des Anspruchs 1 vorgesehen. Zur Lösung der Aufgabe ist ferner ein Verfahren gemäß der technischen Lehre des Anspruchs 13 vorgesehen.

Ein Grundgedanke der Erfindung ist es, dass ein Kraftsensor, beispielsweise ein dediziert zur Ermittlung einer durch Zugkraft bedingten Verformung der Anhängekupplung, insbesondere des Kuppelträgers oder der Halterung, vorgesehener Kraftsensor, anhand der zusätzlichen Auswertung des Beschleunigungswerts in der Lage ist, die Anhänger-Masse des Anhängers zu ermitteln. Dabei ist die Überlegung zu Grunde gelegt, dass sich eine Kraft als das Produkt aus Masse und Beschleunigung ermitteln lässt. Selbstverständlich ist es zweckmäßig, wenn die Auswerteeinrichtung zur Berücksichtigung weiterer Faktoren ausgestaltet ist, beispielsweise zur Auswertung und Berücksichtigung von Reibungswerten, Trägheitsmassen und dergleichen mehr. Das erfindungsgemäße Grundkonzept beruht jedoch auf der Ableitung der Masse des Anhängers aus dem Zugkraftsignal.

Der Beschleunigungswert ist dabei ein Beschleunigungswert in Fahrtrichtung oder x-Richtung, nicht jedoch ein beispielsweise um die Hochachse orientierter Gierraten-Beschleunigungswert.

Zweckmäßigerweise hat die Auswerteeinrichtung einen Signaleingang für ein Beschleunigungssignal. Beispielsweise ist eine Anschlussklemme, eine Buchse oder dergleichen für den Beschleunigungssensor vorhanden. Der Beschleunigungssensor ist bei dieser Ausgestaltung eine separate mit der Auswerteeinrichtung verbindbare Baueinheit.

Es ist auch möglich, dass die Auswerteeinrichtung einen Beschleunigungssensor an Bord hat.

Weiterhin ist es vorteilhaft, wenn die Auswerteeinrichtung einen Temperatursensor aufweist, so dass sie eine Temperaturkompensation vornehmen kann.

Dabei liegt die Erkenntnis zu Grunde, dass der Kupplungsarm oder die sonstige Stelle, an der der mindestens eine Kraftsensor angeordnet ist, beispielsweise im Einwirkungsbereich von Abgasen liegt und dadurch erwärmt wird. Eine Temperaturkompensation oder Berücksichtigung eines Temperatureinflusses bei der Ermittlung von werten oder Daten ist daher vorteilhaft. An dieser Stelle sei bemerkt, dass die Temperaturkompensation selbstverständlich auch bei einer reinen Stützlastmessung zweckmäßig ist, also einen an sich eigenständigen erfindungsgemäßen Gedanken bei einer Kraftmessung an einer Anhängekupplung darstellt.

Es ist jedoch nicht unbedingt notwendig, dass ein Temperatursensor vorgesehen ist. Auch der mindestens eine Kraftsensor kann bereits dazu dienen, eine Temperaturkompensation oder eine Berücksichtigung einer Temperatur zu ermöglichen:

Die Temperaturkompensation kann z.B. bereits am Anfang einer Messung stehen, d.h. dass beispielsweise erfindungsgemäß das von einem jeweiligen Kraftsensor erzeugte Kraftsignal noch ohne Stützlast oder Zuglast als Basiswert dient, vergleichbar beispielsweise mit der Einstellung einer Tara bei einer Waage. Somit wird also beispielsweise der mindestens eine Kraftsensor sozusagen kalibriert. Bei einer unbelasteten Anhängekupplung liefert der Kraftsensor, der beispielsweise in der Art einer Widerstands-Messbrücke ausgestaltet ist, beispielsweise einen ersten Kraftsignalwert bei einer ersten Temperatur und einen zweiten Kraftsignalwert bei einer zweiten, von der ersten Temperatur verschiedenen Temperatur. Bei einer späteren Auswertung einer einen dem Kuppelträger angreifenden Last, also einer Bestimmung einer Größe des Anhängers, z.B. Stützlast oder Masse des Anhängers, wird der jeweilige Kraftsignalwert als Basiswert angesetzt, eignet sich also beispielsweise als Korrekturwert.

Schließlich ist es auch vorteilhaft, wenn bei der Anhängekupplung oder deren Auswerteeinrichtung noch ein Neigungssensor zur Ermittlung eines Neigungswinkels und/oder eine Schnittstelle zum Empfang eines Neigungswinkel-Werts, beispielsweise von einem an Bord des Zugfahrzeugs vorhandenen Neigungswinkelsensors, vorhanden ist. Der Neigungswinkel entspricht einer Schrägneigung des Kraftfahrzeugs bzw. Gespanns bestehend aus Kraftfahrzeug und Anhänger, z.B. wenn das Gespann hangabwärts oder hangaufwärts steht. Die erfindungsgemäße Auswerteeinrichtung bzw. das Verfahren sind zweckmäßigerweise dazu ausgestaltet, den Anhänger-Massewert in Abhängigkeit von dem Neigungswinkel-Wert zu ermitteln und/oder den Einfluss des Neigungswinkels zu eliminieren.

Der Neigungssensor kann aber auch durch den Beschleunigungssensor gebildet sein. Beispielsweise kann der Beschleunigungssensor die in drei zueinander winkeligen Achsrichtungen (X-Achse, Y-Achse und Z-Achse) jeweils eine Beschleunigung erfassen. Wenn das Kraftfahrzeug horizontal steht, misst der Beschleunigungssensor bei stehendem Kraftfahrzeug nur die in Z-Richtung wirkende Kraft, nämlich die Erdanziehungskraft bzw. g. Bei schrägstehendem Kraftfahrzeug hingegen misst der Beschleunigungssensor auch in Richtung der X-Achse und/oder der Y-Achse jeweils einen Anteil der Erdanziehungskraft bzw. Erdbeschleunigung g, so dass durch einen geeigneten, beispielsweise bei der Auswerteeinrichtung hinterlegten Algorithmus die Schrägneigung des Gespanns bzw. des Beschleunigungssensors erfassbar ist.

An dieser Stelle sei bemerkt, dass die Neigungswinkelkompensation und/oder das Vorsehen eines Neigungssensors, insbesondere eines die Funktion eines Neigungssensors leistenden Beschleunigungssensors, und/oder einer Schnittstelle für ein Neigungswinkelsignal selbstverständlich auch bei einer reinen Stützlastmessung zweckmäßig ist, also einen an sich eigenständigen erfindungsgemäßen Gedanken bei einer Kraftmessung an einer Anhängekupplung darstellt.

Die Auswerteeinrichtung hat zweckmäßigerweise eine Bus-schnittstelle für einen Daten-Bus des Zugfahrzeugs. Beispielsweise umfasst die Schnittstelle eine CAN-Schnittstelle, eine LIN-Schnittstelle oder dergleichen. Über die Bus-schnittstelle kann beispielsweise der Beschleunigungswert empfangen werden. Zum Beispiel hat das Zugfahrzeug einen oder mehrere Beschleunigungssensoren. Es ist auch möglich, dass das Bordnetz des zugfahrzeugs Beschleunigungswerte übermittelt, die beispielsweise aufgrund von Drehzahlsignalen ermittelt wurden. Die Auswerteeinrichtung ist beispielsweise ausgestaltet, über die Bus-Schnittstelle den Massewert des Anhängers zu übertragen. Es versteht sich, dass anstelle einer Bus-Schnittstelle auch eine sonstige Datenschnittstelle möglich ist.

Die Auswerteeinrichtung ist zweckmäßigerweise auch zur Ermittlung einer Stützlast, die auf der Anhängekupplung aufgrund des Anhängers lastet, ausgestaltet. In diesem Zusammenhang ist es vorteilhaft, wenn die Auswerteeinrichtung bei der Ermittlung des Anhänger-Massewerts des Anhängers eine Stützlast, die der Anhänger auf die Anhängekupplung ausübt, berücksichtigt. Eine Variante kann dabei zwar vorsehen, dass die Stützlast extern ermittelt und über einen entsprechenden Daten- oder Signaleingang an die Auswerteeinrichtung übermittelt wird. Bevorzugt ist es jedoch, wenn die Auswerteeinrichtung selbst dazu ausgestaltet ist, die stützlast zu ermitteln.

Eine vorteilhafte Überlegung sieht vor, dass die Auswerteeinrichtung den Anhänger-Massewert nicht im Stand, sondern bei Fahrt des Zugfahrzeugs ermittelt. Beispielsweise ist es vorteilhaft, wenn die Auswerteeinrichtung den Anhänger-Massewert in Abhängigkeit von einer Fahrgeschwindigkeit des Zugfahrzeugs ermittelt. So sieht eine Variante vor, dass die Auswerteeinrichtung erst bei Überschreiten eines unteren Geschwindigkeitsgrenzwertes mit der Ermittlung des Anhänge-Massewerts beginnt. Es ist zweckmäßig, wenn die Auswerteeinrichtung den Anhänger-Massewert nur bis zum Erreichen eines oberen Geschwindigkeitsgrenzwertes ermittelt. Hierbei liegt die Überlegung zu Grunde, dass bei geringen Fahrgeschwindigkeiten im Wesentlichen die Zugkraft eine der Anhängekupplung wirkt, während bei größeren Geschwindigkeiten beispielsweise auch Luftwiderstand-Einflüsse zu berücksichtigen wären. Selbstverständlich ist es denkbar, einen Algorithmus bei einer erfindungsgemäßen Anhängekupplung vorzusehen bzw. bei deren Auswerteeinrichtung, der auch Luftwiderstandseinflüsse berücksichtigt und gegebenenfalls eliminiert.

Es ist auch vorteilhaft, wenn die Auswerteeinrichtung das Kraftsignal erst bei Überschreiten eines unteren Mindest-Beschleunigungswerts zur Ermittlung der Anhänger-Masse auswertet. Die Auswertung eines Beschleunigungswerts nur bei überschreiten eines unteren Mindest-Beschleunigungswerts hat zum Beispiel den Vorteil, dass Störeinflüsse, beispielsweise aufgrund von Vibrationen etc., die Auswertung nicht oder nur unwesentlich stören. Beispielsweise müssen derartige Störeinflüsse dann nicht eliminiert werden.

Ferner kann auch eine obere Grenze vorgesehen sein, das heißt dass die Auswerteeinrichtung das Kraftsignal nur bis zum Erreichen eines Maximal-Beschleunigungswerts auswertet.

Eine weitere Variante der Erfindung sieht vorteilhaft vor, dass die Auswerteeinrichtung das Kraftsignal während einer Zeitdauer kontinuierlich ansteigende Beschleunigungswerte oder kontinuierlich abfallende Beschleunigungswerte als ein die an der Anhängekupplung angreifende Zugkraft und/oder Schubkraft repräsentierendes Signal auswertet. Wenn also beispielsweise die Beschleunigungskurve ansteigt (bei einem Beschleunigungsvorgang) oder abfällt (bei einem Bremsvorgang) wertet die Auswerteeinrichtung das Kraftsignal als Zugkraft-Signal aus und/oder ermittelt die Auswerteeinrichtung aus dem Kraftsignal jeweils den Anhänger-Massewert.

Eine Variante der Erfindung sieht vor, dass die Auswerteeinrichtung erkennt, wenn das Zugfahrzeug aus dem Stand beschleunigt. Bevorzugt wird dann die Messung der Stützlast bzw. deren Ermittlung gestoppt. Stattdessen beginnt die Auswerteeinrichtung mit der Auswertung der Zugkraft und der Beschleunigungswerte und stoppt diesen Vorgang erst dann, wenn die Beschleunigung endet oder wenn die Fahrgeschwindigkeit einen bestimmten Grenzwert überschreitet, beispielsweise 5 bis 10 km/h.

Eine bevorzugte Ausführungsform sieht vor, dass das Kraftsignal des mindestens einen Kraftsensors beides repräsentiert, nämlich eine an der Anhängekupplung angreifende Stützlast und eine an der Anhängekupplung angreifende Zuglast des Anhängers. Die Auswerteeinrichtung ist zweckmäßigerweise zur Auswertung des Kraftsignals zur Ermittlung der Stützlast und zur Ermittlung der Zuglast in Abhängigkeit von einem Fahrzustand des Zugfahrzeugs ausgestaltet.

Vorteilhaft umfasst der mindestens eine Kraftsensor einen auf Druck- und/oder Zug empfindlichen Verformungssensor, der an einem an dem Kuppelträger oder der Halterung vorgesehenen Anbringungsort angeordnet ist, an dem eine Dehnungsverformung und/oder Stauchungsverformung aufgrund einer auf die Anhängekupplung einwirkenden, durch den Anhänger verursachten Kraft messbar ist, wobei der Anbringungsort so gewählt ist, dass an dem Anbringungsort eine durch eine bei einem Zugbetrieb des Anhängers auf das Kuppelelement wirkende Zuglast verursachbare Verformung zur Betätigung des mindestens einen Kraftsensors vorhanden ist und eine durch eine auf die Anhängekupplung wirkende Stützlast des Anhängers verursachbare Verformung zur Betätigung des mindestens einen Kraftsensors vorhanden ist.

Das Wort "Zuglast" soll so verstanden werden, dass sowohl eine Belastung auf Zug, d.h. beim Ziehen des Anhängers, als auch eine Belastung auf Druck, d.h. beim Schieben des Anhängers bzw. Auflaufen auf das zugfahrzeug bei beispielsweise einem Bremsen unter den Begriff Zuglast fällt. Mithin kann also eine Belastung der Anhängekupplung in Horizontalrichtung bei Geradeausfahrt des Gespanns als Zuglast verstanden werden.

Selbstverständlich tritt auch in vertikaler Richtung nicht nur eine Drucklast auf, die als Stützlast bezeichnet wird, sondern auch eine Belastung nach vertikal oben, zum Beispiel beim Überfahren einer Kuppe oder Bodenunebenheit. Zweckmäßigerweise ist der Anbringungsort für den mindestens einen Kraftsensor im Bereich einer größten durch die Zuglast verursachbaren Verformung des Kuppelträgers oder der Halterung vorgesehen.

Der Kuppelträger ist erfindungsgemäß als ein Kupplungsarm ausgestaltet. Der Kupplungsarm enthält erfindungsgemäß mehrere Krümmungen, Winkel und dergleichen. Das Kuppelelement ist beispielsweise eine Kupplungskugel, wobei selbstverständlich auch andere Geometrien, beispielsweise polygonale, Drehkräfte übertragende Kuppelelemente möglich sind. Bevorzugt ist das Kuppelelement fest am Kuppelträger angeordnet, insbesondere mit diesem einstückig. Es ist aber auch eine mehrteilige Bauweise möglich.

Die Halterung kann eine Halterung sein, an der der Kuppelträger fest montiert ist. Weiterhin sind auch Stecksysteme oder sonstige Systeme möglich, bei denen der Kuppelträger lösbar an der Halterung befestigbar ist, insbesondere mittels einer Steckverbindung. Es ist aber auch eine bewegliche Lagerung möglich, bei der der Kuppelträger beispielsweise schwenkbar und/oder schiebebeweglich an der Halterung gelagert ist.

Weiterhin ist es vorteilhaft, wenn der Anbringungsort im Bereich einer größten durch die Stützlast verursachbaren Verformung des Kuppelträgers oder der Halterung vorgesehen ist. Natürlich ist es zweckmäßig, wenn ein Anbringungsort gefunden werden kann, bei dem die Dehnungsverformung und Stauchungsverformung sowohl bei der Zuglast als auch bei der Stützlast jeweils maximal sind. Es gibt jedoch auch Situationen bzw. Geometrien von Halterung und/oder Kuppelträger, bei denen ein solcher optimaler Anbringungsort gar nicht erst gefunden werden kann. So kann beispielsweise die Verformung bei der Stützlast an einer anderen Stelle ihr Maximum haben als die Verformung bei der Zuglast. Zweckmäßig ist es dann, wenn sozusagen ein Kompromiss gefunden wird, so dass die durch die Zuglast verursachbare Verformung und die durch die Stützlast verursachbare Verformung einen ähnlichen Betrag oder den gleichen Betrag an dem als Kompromiss gefundenen Anbringungsort aufweisen.

Ein weiterer Faktor bzw. einen Optimierungskriterium kann auch sein, dass der Anbringungsort möglichst an einer von einer Fahrbahn abgewandten Oberseite des Kuppelträgers oder der Halterung vorgesehen ist. Dadurch ist das Risiko, dass der Kraftsensor beschädigt wird, deutlich geringer.

Weiterhin ist es ein Optimierungskriterium, dass der Anbringungsort möglichst nahe bei einer Auswerte- und/oder Anzeigeeinrichtung angeordnet ist. Beispielsweise kann eine Leitungsverbindung zu einer Auswerte- und/oder Anzeigeeinrichtung möglichst kurz gewählt werden. Wenn also beispielsweise zwei Anbringungsorte alternativ zur Verfügung stehen, an denen jeweils eine zur Betätigung des Kraftsensors ausreichende Verformung bei Stützlast und Zuglast vorhanden ist, ein Anbringungsort jedoch näher bei der Auswerte- und/oder Anzeigeeinrichtung ist als der andere Anbringungsort, wird zweckmäßigerweise der näher gelegene Anbringungsort ausgewählt. Die Übertragungsverluste für die Signalübertragung vom Kraftsensor bzw. Verformungssensor zur auswertenden und/oder anzeigenden Einheit sind also kurz. Das Risiko der Einstrahlung von Fremdsignalen oder sonstigen Störungen wird dadurch wesentlich kleiner.

Beispielsweise kann der Verformungssensor einen Dehnungsmessstreifen und/oder einen Drucksensor umfassen.

Selbstverständlich kann es zweckmäßig sein, dass mehrere Kraftsensoren vorhanden sind, von denen mindestens einer ein Verformungssensor, der die Zuglast und die Stützlast messen kann. Wenn mehrere Kraftsensoren vorhanden sind, möglicherweise auch mehrere sozusagen multifunktionale Kraftsensoren, die jeweils Stützlast und Zuglast messen können, erhöht dies die Messgenauigkeit.

Beispielsweise kann die Dehnung bzw. Verformung des Kuppelträgers oder der Halterung anhand einer Finite-Elemente-Berechnung ermittelt werden.

Der Kraftsensor bzw. Verformungssensor liefert also sowohl bei Belastung mit einer Zuglast als auch bei einer Belastung der Anhängekupplung mit einer Stützlast jeweils ein Kraftsignal. Bevorzugt ist bei dieser Ausführungsform vorgesehen, dass die Anhängekupplung eine Auswerteeinrichtung umfasst, die zur Auswertung des Kraftsignals in Abhängigkeit von einem Beschleunigungszustand und/oder einem Geschwindigkeitszustand des Zugfahrzeugs und somit auch der Anhängekupplung ausgestaltet ist. Wenn das Gespann steht, lastet im Wesentlichen die Stützlast auf der Anhängekupplung. Die Geschwindigkeit ist also beispielsweise gleich null. Auch die Beschleunigung bzw. der Beschleunigungswert ist null. Dann ermittelt die Auswerteeinrichtung vorteilhaft die Stützlast anhand des Kraftsignals. Wenn das Gespann jedoch fährt, insbesondere wenn es beschleunigt oder abbremst, greift eine Zuglast an der Anhängekupplung an. Dann ermittelt die Auswerteeinrichtung zweckmäßigerweise die Zuglast.

Bevorzugt ist eine Auswerteeinrichtung vorgesehen, beispielsweise die vorgenannte Auswerteeinrichtung, die zur Ermittlung eines Anhänger-Massewerts des Anhängers anhand eines oder mehrerer Kraftsignale des mindestens einen Kraftsensors und eines Beschleunigungswerts ausgestaltet ist. Anhand der Werte für die Stützlast und für die Zuglast sowie des Beschleunigungswerts kann also die Auswerteeinrichtung gemäß dieser Ausführungsform der Erfindung eine Anhängermasse ermitteln.

Die nachfolgende Vorgehensweise ist dabei bevorzugt:
In vertikaler Richtung, d.h. in Z-Richtung wirkt die Stützlast Fz auf die Anhängekupplung:

$$F_z = st * g \qquad (1)$$

In der Formel (1) sind g die Erdbeschleunigung und st die auf das Kuppelelement wirkende Stützmasse.

Eine in x-Richtung bzw. horizontal in Fahrzeuglängsrichtung an der Anhängekupplung angreifende Zuglast Fx kann mit der nachfolgenden Formel (2) zusammengefasst werden:

$$F_x = F_T + F_L + F_R + F_{rot} \qquad (2)$$

Die einzelnen Faktoren der Zuglast Fx sind dabei die Trägheitskraft FT, die Luftwiderstandskraft FL, eine die Rollreibung verursachte Kraft FR und eine Kraft Frot, in der die durch die Trägheit von Reifen und anderen rotatorischen Massen bedingten Kräfte zusammengefasst sind.

Bei geringen Geschwindigkeiten kann die Luftwiderstandskraft FL vernachlässigt werden. Es ist daher vorteilhaft, die erfindungsgemäße Ermittlung einer Anhängermasse bei relativ niedrigen Geschwindigkeiten durchzuführen, bei denen der Luftwiderstand noch gering ist. Selbstverständlich ist es auch denkbar, dass beispielsweise der Einfluss des Luftwiderstands von der Auswerteeinrichtung geschwindigkeitsabhängig ermittelt wird, um den jeweiligen Einfluss auf das Gesamt-Resultat der Zuglast Fx zu eliminieren.

Wenn jedoch die Luftwiderstandskraft eliminiert wird, kann die obige Formel (2) wie folgt vereinfacht werden:

$$F_x = F_T + F_R + F_{rot} \qquad (3)$$

Die durch die Rollreibung verursachte, an der Anhängekupplung angreifende Kraft FR wird durch die Masse m des Anhängers beeinflusst, wobei jedoch ein Teil dieser Masse von der Anhängekupplung abgestützt wird, d.h. so dass diese Stützlast oder Stützmasse keinen Einfluss auf die Rollreibung hat. Die Stützmasse st ist also bei der folgenden Formel (4) von dem Massewert m subtrahiert:

$$F_R = (m - st) * g * \mu \qquad (4)$$

In der Formel (4) sind g die Erdbeschleunigung und μ ein Rollwiderstandskoeffizient. Der Rollwiderstandkoeffizient kann als ein konstanter Wert, z.B. Mittelwert, angesehen werden, der bei einer üblichen Bereifung bzw. bei durchschnittlichen Fahrbahnbelägen vorhanden ist.

Die Trägheitskraft FT wird im Wesentlichen durch die Anhängermasse m und die Beschleunigung ax in X-Richtung bestimmt:

$$FT = m * ax \qquad (5)$$

Wenn die Formeln (4) und (5) in die Formel (3) eingesetzt werden, ergibt sich folgendes:

$$F_x - F_{rot} = m * a_x + (m - st) * g * \mu \qquad (6)$$

Wenn dann noch die Formel (1) berücksichtigt wird, kann man folgende Formel entwickeln:

$$F_x - F_{rot} + F_z * \mu = m * (a_x + g * \mu) \qquad (7)$$

Durch Umformung der Formel (7) kann die Masse m des Anhängers wie folgt bestimmt werden:

$$m = \frac{F_x - F_{rot} + F_z * \mu}{(a_x + g * \mu)} \qquad (8)$$

Unter Berücksichtigung der Überlegung, dass die Rotationsbeschleunigung nur geringe Kräfte verursacht, d.h. dass das Verhältnis der Kraft Frot zur Gesamt-Kraft Fx in Horizontalrichtung wie folgt lautet

$$\frac{F_{rot}}{F_x} * 100 = 2\% \text{ bis } 3\%$$

kann in der obigen Formel (8) der Anteil der Kraft Frot vernachlässigt werden. Die Masse des Anhängers lässt sich also durch die beiden Kräfte Fx und Fz sowie den Beschleunigungswert in X-Richtung bzw. Fahrzeug-Längsrichtung ax ermitteln.

Eine vorteilhafte Variante der Erfindung sieht dabei vor, dass mit einem einzigen Kraftsensor beide Kräfte Fx und Fz ermittelt werden. Dabei ist die Auswerteeinrichtung zweckmäßigerweise so ausgestaltet, dass sie zunächst im Stand die durch die Stützlast verursachten Kräfte, d.h. die Kräfte in z-Richtung, nämlich die Kraft Fz, ermittelt und bei der anschließenden Beschleunigung des Gespanns die in X-Richtung wirkende Kraft Fx. In diesem Zusammenhang ist es vorteilhaft, wenn die Auswerteeinrichtung einen Beschleunigungswert und/oder einen Geschwindigkeitswert auswertet, um sozusagen zwischen den einzelnen Kraftermittlungen umzuschalten.

So ist es beispielsweise vorteilhaft, dass zunächst die in vertikaler Richtung wirkende Kraft Fz ermittelt wird und die Auswerteeinrichtung den dabei ermittelten Wert in die obige Formel (8) sowie den anschließend bei der Beschleunigung des Gespanns ermittelten Wert der Kraft Fx zur Ermittlung der Masse des Anhängers anhand beispielsweise der Formel (8) auswertet.

Eine bevorzugte Ausführungsform sieht vor, dass sozusagen der Beschleunigungssensor in Richtung der X-Achse kalibriert wird, d.h. dass bei einem Beschleunigungsvorgang aus dem Stand der von dem Beschleunigungssensor oder dem Bordnetz des Zugfahrzeugs gelieferte Beschleunigungswert um den durch die Schrägneigung des Kraftfahrzeugs bzw. Gespanns hervorgerufenen Anteil des Beschleunigungswerts korrigiert wird. Der Beschleunigungssensor wird sozusagen initialisiert.

Eine Formel zur Korrektur des in Fahrzeuglängsrichtung wirkenden, um die Einwirkung der Schrägneigung des Gespanns korrigierten Beschleunigungswerts, d.h. des in X-Richtung wirkenden um den Hangabtrieb korrigierten Beschleunigungswerts $a_{xkorrigiert}$, lautet beispielsweise wie folgt:

$$a_{x\,korrigiert} = a_x + g * \sin(\theta) \qquad (9)$$

wobei ax der gemessene Beschleunigungswert in X-Richtung, g die Erdbeschleunigung und θ der Neigungswinkel des Kraftfahrzeugs in X-Richtung sind. Der Neigungswinkel-Wert wird beispielsweise, wie schon erwähnt, vom Beschleunigungssensor, der mehrachsig messen kann, ermittelt oder durch einen separaten Neigungswinkelsensor oder vom Bordnetz des Zugfahrzeugs übermittelt.

Die Auswerteeinrichtung ist vorzugsweise dazu ausgestaltet, eine Mittelwertbildung durchzuführen. Beispielsweise bildet die Auswerteeinrichtung mehrere Zwischen-Mittelwerte des Beschleunigungswerts über aufeinanderfolgende zeitintervalle und wertet diese Mittelwerte aus.

Beispielsweise führt die Auswerteeinrichtung eine Auswertung einer Beschleunigungsfahrt nur dann durch, wenn ein erster Zwischen-Mittelwert eine Beschleunigung von beispielsweise mehr als $1 \text{ m/s}^2$ repräsentiert. Das ist dann ein Anfangskriterium.

Wenn die Beschleunigungsfahrt begonnen hat, ist eine weitere Mittelwertauswertung oder Auswertung von Zwischen-Mittelwerten vorteilhaft:
Insoweit ein Zwischen-Mittelwert einen Mindest-Beschleunigungswert repräsentiert, beispielsweise von mehr als 1,5 $\text{m/s}^2$ aufweist, findet er Eingang in die Auswertung.

Es ist z.B. bevorzugt, wenn die Auswertung sich auf mehrere Zwischen-Mittelwerte bezieht. Dadurch wird die Genauigkeit größer. Wenn mehrere aufeinanderfolgende Zwischen-Mittelwerte, beispielsweise 3 oder 4 Zwischen-Mittelwerte das Kriterium des Mindest-Beschleunigungswerts erfüllen, führt die Auswerteeinrichtung eine Auswertung durch.

Bevorzugt ist eine Auswertung bzw. Bestimmung der Anhänger-masse m gemäß der nachfolgenden Formel (10), bei der n die Anzahl von Zwischen-Mittelwerten, Fx die auf die Anhängekupplung in X-Richtung einwirkende Kraft und ax die Beschleunigung in X-Richtung sind.

$$m = \frac{1}{n}\sum_{i=1}^{n}\frac{F_{xi}}{a_{xi}} \qquad (10)$$

Das erfindungsgemäße Verfahren wird zweckmäßigerweise in einem Bereich angewendet, bei dem die Einflüsse von Rollreibung und Windwiderstand des Anhängers nur sehr gering sind, d.h. beispielsweise bei Überschreiten einer MindestGeschwindigkeit und/oder Mindest-Beschleunigung, d.h. wenn das Gespann bereits rollt, jedoch noch unterhalb einer vorbestimmten Maximal-Geschwindigkeit und/oder Maximal-Beschleunigung ist, bei der die Einflüsse des Windwiderstands größer werden. Somit können also beispielsweise die in den obigen Formeln angegebenen Kraftwerte Frot vernachlässigt werden. Die aufgezeigte Mittelwertbildung erhöht zusätzlich noch die Messgenauigkeit.

Ein weiteres, zweckmäßigerweise zu beachtendes Kriterium ist es, dass eine Beschleunigungsfahrt (positive Beschleunigung bzw. schneller werdendes Zugfahrzeug oder negative Beschleunigung/Bremsen), eine Mindestdauer hat. Wenn also beispielsweise eine Beschleunigungsfahrt mindestens 0,5s bis 5s, zweckmäßigerweise ca. 1 s bis 1,5 s dauert, wird die Beschleunigung ausgewertet.

Selbstverständlich ist es zwar für die Masseerkennung bzw. Masseermittlung des Anhängers vorteilhaft, wenn nur ein einziger Kraftsensor nötig ist, der sowohl die Zuglast als auch die Stützlast erfassen kann. Es ist auch möglich, dass beispielsweise für die Ermittlung und Messung beider Kräfte jeweils ein separater oder mehrere separate Kraftsensoren, zum Beispiel Dehnungsmessstreifen, vorhanden sind.

Weiterhin stellt es eine vorteilhafte Variante der Erfindung dar, wenn die Auswerteeinrichtung eine Mittelwertbildung beherrscht, d.h. dass sie beispielsweise mehrere Stützlastwerte ermittelt und daraus einen Mittelwert bildet, um Fehler zu verringern oder zu eliminieren, die beispielsweise durch eine ungünstige Position des Kupplungsbereichs in einer Fahrbahnmulde oder über einer Fahrbahnerhebung entstehen kann. Das Gespann kann nämlich in vertikaler Richtung bzw. X-Richtung einen Winkel zueinander aufweisen, der die Stützlast beeinflusst.

Weiterhin ist eine Plausibilitätsprüfung zweckmäßig, bei der die Auswerteeinrichtung nur solche Kraftwerte und oder solche Beschleunigungswerte zur Berechnung des Massewert des Anhängers berücksichtigt, die plausibel sind.

Es ist weiterhin vorteilhaft, wenn die Auswerteeinrichtung auch in Bezug auf den Massewert mehrere Werte ermittelt, beispielsweise bei unterschiedlichen Beschleunigungswerten, anhand mehrerer nacheinander erfolgender Beschleunigungsvorgänge und dergleichen, um auf diesem Wege Fehler zu vermeiden.

Die Anhängekupplung weist beispielsweise eine Anzeigeeinrichtung zur Anzeige der ermittelten Werte von Stützlast und/oder Zuglast und/oder Anhänger-Massewert auf.

Das erfindungsgemäße Verfahren kann beispielsweise anhand einer Software realisiert werden, wobei ein Prozessor der Auswerteeinrichtung anhand der Software in der Lage ist, die erfindungsgemäßen Verfahrensschritte auszuführen. Ein anderer Aspekt der Erfindung kann vorsehen, dass die Auswerteeinrichtung ein Steuergerät des Zugfahrzeugs ist, das anhand der vorgenannten Software in der Lage ist, das erfindungsgemäße Verfahren durchzuführen.

Nachfolgend werden Ausführungsbeispiele der Erfindung anhand der Zeichnung erläutert. Es zeigen:

Figur 1 eine erfindungsgemäße Anhängekupplung mit einem an einer Halterung feststehenden Kuppelträger in perspektivischer Ansicht von schräg oben,

Figur 2 einen Kuppelträger der Anhängekupplung gemäß Figur 1 von schräg oben,

Figur 3 den Kuppelträger gemäß Figur 2 von der Fahrzeugseite her,

Figur 4 eine Unterseite des Kuppelträgers gemäß Figuren 2, 3,

Figur 5 eine Anhängekupplung mit einem an einer Halterung beweglich gelagerten Kuppelträger und einer Auswerteeinrichtung,

Figur 6 den Kuppelträger der Anhängekupplung gemäß Figur 5 von vorn,

Figur 7 eine Unterseite des Kuppelträgers der Anhängekupplung gemäß Figuren 5, 6,

Figur 8 eine Beschleunigungskurve eines Zugfahrzeugs,

Figur 9          ein Blockschaltbild einer Auswerteeinrichtung,

Figur 10         ein Ablaufdiagramm eines Verfahrens, das von der Auswerteeinrichtung gemäß Figur 9 durchführbar ist,

Figur 11         eine Beschleunigungskurve eines Beschleunigungswerts ax und eine zugehörige Mittelwert-Auswertung der Auswerteeinrichtung gemäß Figur 9, und

Figur 12         eine weitere Beschleunigungskurve des Beschleunigungswerts ax und eine zugeordnete korrigierte Kurve.

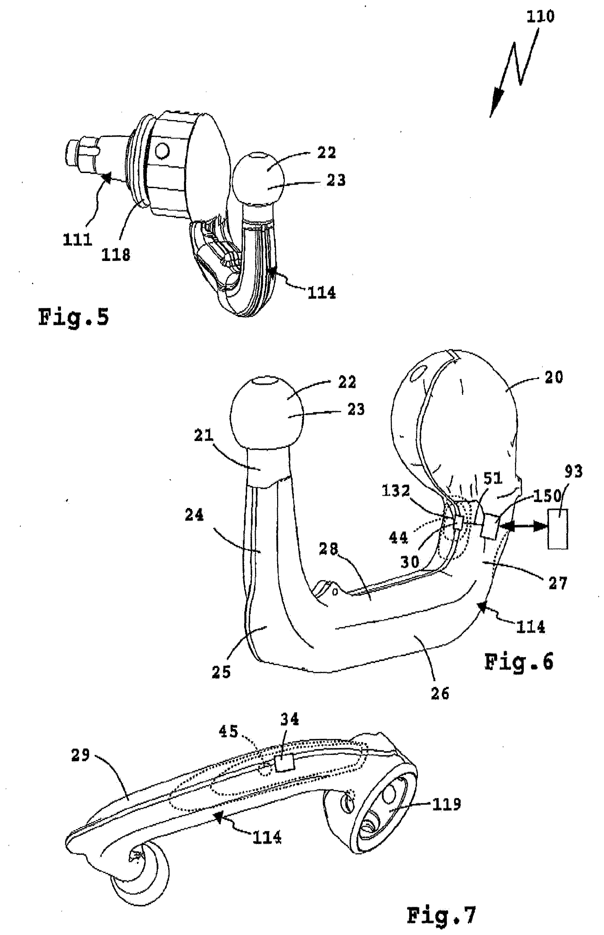

In der Zeichnung sind Anhängekupplungen 10 und 110 dargestellt, die teilweise gleiche oder ähnliche Komponenten aufweisen, die dementsprechend mit den gleichen Bezugsziffern oder mit Bezugsziffern versehen sind, die bei der Anhängekupplung 110 um 100 größer sind als bei der Anhängekupplung 10.
Die Anhängekupplungen 10, 110 weisen Halterungen 11, 111 auf, die an einem Zugfahrzeug 90, zum Beispiel einem Personenkraftwagen, befestigbar sind.
Beispielsweise umfasst die Halterung 11 einen an einem Querträger 91 des Zugfahrzeugs 90 angeordneten Grundhalter 12, von dem 2 Halteschenkel 13 abstehen. Zwischen den Halteschenkeln 13 ist ein Kuppelträger 14 angeordnet. Der Kuppelträger 14 ist mittels Schrauben 15, die Bohrungen 16 des Kuppelträgers 14 an einem fahrzeugseitigen Halteabschnitt 20 durchdringen, mit den Halteschenkeln 13 verschraubt. Somit ist also der Kuppelträger 14 fest an der Halterung 11 befestigt. Von der Halterung 11 steht noch ein Steckdosenhalter 17 seitlich ab, an dem eine Anhängersteckdose (nicht dargestellt) befestigbar ist.
Bei der Anhängekupplung 110 ist eine am Zugfahrzeug 90 befestigbare, zum Beispiel an einem nicht dargestellten Querträger befestigbare, Halterung 111 vorgesehen, die den Kuppelträger 114 beweglich lagert. Beispielsweise ist der Kuppelträger 114 schwenkbar und/oder verschieblich an der Halterung 111 gelagert. Ein Lagerkopf 118 der Halterung 111 greift in eine Lageraufnahme 119 an einem Halteabschnitt 20 des Kuppelträgers 114 am fahrzeugseitigen Endbereich des Kuppelträgers 114 ein, so dass eine Lagerung in der Art eines Kugelgelenks gegeben ist.
Der Kuppelträger 114 ist beispielsweise zwischen einer in Figur 5 dargestellten Gebrauchsstellung, die zum Ziehen eines Anhängers 92 vorgesehen ist, und einer hinter einen nicht dargestellten Stoßfänger, beispielsweise näher an den Querträger zurück verstellten, Nichtgebrauchsstellung verstellbar. Zusätzlich ist noch eine nicht dargestellte Verriegelung vorhanden, um den Kuppelträger 114 zumindest in der Gebrauchsstellung zu verriegeln.
Die Kuppelträger 14, 114 haben an ihren vom Zugfahrzeug 90 entfernten Endbereichen 21 jeweils eine Kupplungskugel 22, die als Kuppelelement 23 zum Ankuppeln des Anhängers 92 (schematisch dargestellt) dient. Die Kupplungskugeln 22 sind an in der Gebrauchsstellung der Anhängekupplungen 10, 110 hoch stehenden Armabschnitten 24 vorgesehen. Die Armabschnitte 24 gegen mit einer Krümmung 25 in einen bei Gebrauch der Kuppelträger 14, 114 im Wesentlichen horizontal verlaufenden Armabschnitt 26 über.
Beim Kuppelträger 14 sind der Armabschnitt 26 und der Endbereich 21 quasi einstückig, d.h. dass der Endbereich 21 an einem freien Ende des Armabschnitts 26 vorgesehen ist. Nachfolgend wird jedoch der frei vor die Halterung 11 vorstehende Abschnitt des Kuppelträgers 14 als Armabschnitt 26 bezeichnet.
Beim Kuppelträger 114 ist zwischen dem Halteabschnitt 20 und dem Armabschnitt 26 noch eine weitere Krümmung 27 vorhanden.
Die Anhängekupplungen 10, 110 sind dazu ausgestaltet, sowohl eine in einer vertikalen Richtung bzw. z-Richtung auf das Kuppelelement 23 wirkende Kraft, nachfolgend als Stützlast Fz bezeichnet, als auch eine in einer horizontalen Richtung bzw. x-Richtung auf das Kuppelelement 23 wirkende Last, nachfolgend als Zuglast Fx bezeichnet, zu messen. Dazu ist ein einziger Kraftsensor 30 ausreichend. Der Kraftsensor 30 kann beispielsweise ein Dehnungsmessstreifen 31 oder ein anderer Verformungssensor 35 sein, z.B. ein Drucksensor, der zwischen zwei Betätigungswiderhalte am Kuppelträger 14 eingespannt ist. Der Kraftsensor 30 ist so optimal an einem Anbringungsort 32 platziert, dass sein Kraftsignal 33 sowohl die Zuglast Fx als auch die Stützlast Fz repräsentiert.

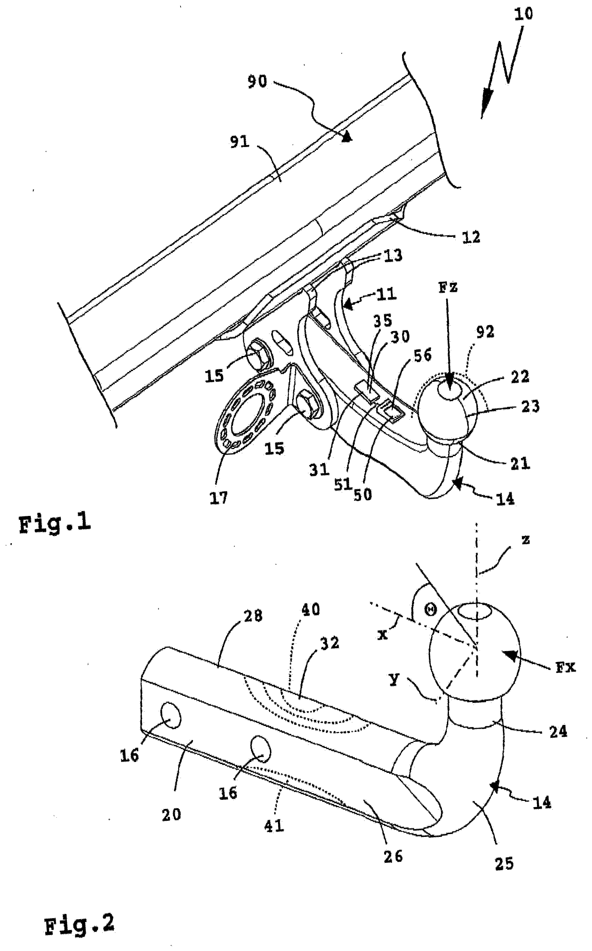

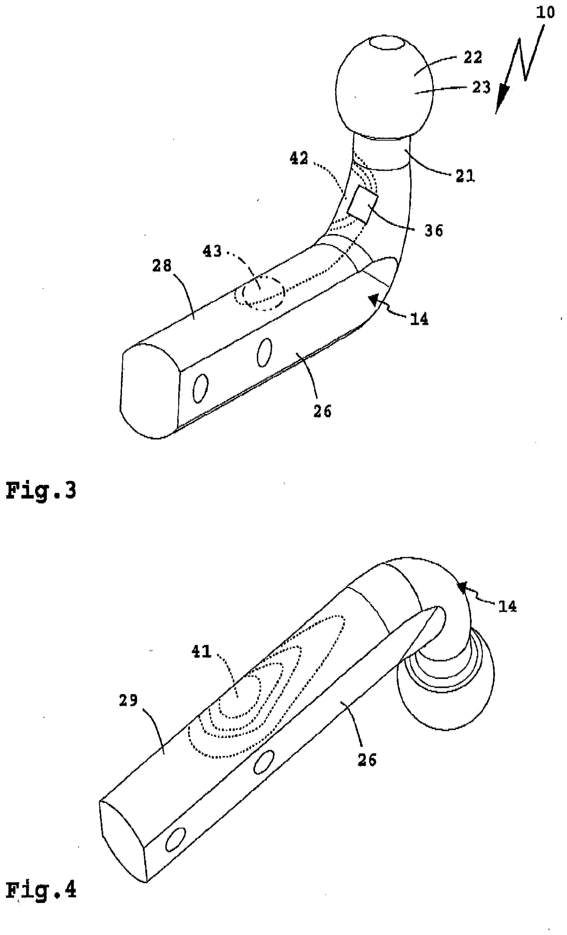

In den Figuren 2-4 sind mit gestrichelten Linien Dehnungsverläufe bzw. Dehnungsbereiche eingezeichnet, die sich bei unterschiedlicher Kraftbeanspruchung des Kuppelträgers 14 mit der Zuglast Fx und der Stützlast Fz ergeben. Bei einer Belastung mit der Stützlast Fz ergeben sich beispielsweise die in den Figuren 2 und 4 sichtbaren Verformungsbereiche 40 und 41 an einer Oberseite 28 und einer Unterseite 29 des Armabschnitts 26. Diese Dehnungsverformung stellt sich beispielsweise bei einer Belastung von 100 kg auf das Kuppelelement 23 ein.
In Figur 3 ist der Kuppelträger 14 bei Belastung mit einer Zuglast Fx dargestellt, beispielsweise einer Krafteinwirkung von 5 kN. Zusätzlich ist es dabei zweckmäßig, die noch immer wirkende Stützlast Fz von beispielsweise 100 kg, auf das Kuppelelement 23 wirken zu lassen. Dabei bildet sich ein Verformungsbereich 42 insbesondere einen der Innenseite der Krümmung 25 aus. Der Verformungsbereich 42 erstreckt sich aber bis in den Verformungsbereich 40 hinein (Figur 2). Somit ist also quasi eine Schnittmenge vorhanden, nämlich ein Überlappungsbereich 43, an dem sich die Verformungsbereiche 40 und 42 überlappen und sowohl bei Belastung mit der Zuglast Fx als auch mit der Stützlast Fz eine signifikante Verformung vorhanden ist. Im Überlappungsbereich 43 ist also der Kraftsensor 30 zweckmäßigerweise angeordnet, so dass er durch Belastung des Kuppelelements 23 mit der Zuglast Fx als auch mit der Stützlast Fz betätigbar ist und sein Kraftsignal 33 beide Kräfte repräsentiert.

Im Prinzip ist auch auf der Unterseite 29 des Kuppelträgers 14 ein Überlappungsbereich von Verformungsbereichen vorhanden, die sich bei Belastung des Kuppelelements 23 mit der Zuglast und mit der Stützlast einstellt. Die Anordnung des Kraftsensors 30 an der Oberseite 28 hingegen hat den Vorteil, dass der Kraftsensor 30 dort vor Umwelteinflüssen besser geschützt ist und zudem auch die Platzierung einer zweckmäßigerweise gut sichtbaren Auswerteeinrichtung 50 näher bei den Kraftsensor 30 möglich ist. Eine Leitungsverbindung 51 zwischen dem Kraftsensor 30 und der Auswerteeinrichtung 50 ist sehr kurz.

Auch die Anhängekupplung 110 kommt mit einem einzigen Kraftsensor 30 aus. Bei Belastung des Kuppelträgers 114 mit einer Zuglast Fx und auch einer Stützlast Fz bildet sich beispielsweise ein Verformungsbereich 44 an der Innenseite der Krümmung 27 aus. Auch an der Unterseite 29 findet bei Belastung des Kuppelelements 23 eine Verformung statt, die sich in einem Verformungsbereich 45 befindet. Allerdings ist, wie bereits erwähnt, die Anordnung eines Kraftsensors an einer Unterseite eines Kuppelträgers, d.h. näher bei einer Fahrbahn, eher ungünstig. Daher ist der Kraftsensor 30 am Anbringungsort 132 in der Krümmung 27 angeordnet. Dort ist der Kraftsensor 30 vor Umwelteinflüssen zudem noch durch den nicht dargestellten Stoßfänger des Zugfahrzeugs 90 geschützt. In der Nähe des Kraftsensors 30 befindet sich eine Auswerteeinrichtung 150, beispielsweise direkt neben dem Kraftsensor 30, so dass auch hier eine kurze Leitungsverbindung 51 gegeben ist.

Nun wäre es möglich, dass weitere Kraftsensoren, beispielsweise Drucksensoren oder Dehnungsmessstreifen, an den Anhängekupplungen 10, 110 vorhanden sind, so dass dediziert für die Zugkraft und die Stützlast separate Messergebnisse für die Auswerteeinrichtungen 50, 150 zur Verfügung stünden.

Beispielsweise könnte an der Unterseite 29 des Kuppelträgers 14 im Verformungsbereich 41 ein weiterer Kraftsensor 34, insbesondere ein Dehnungsmessstreifen, vorgesehen sein.

Die Auswerteeinrichtungen 50, 150 können beispielsweise die Stützlast Fz und die Zuglast Fx anzeigen, zwischenspeichern, an ein Bordnetz 93 des Zugfahrzeugs 90 übertragen oder dergleichen. Die Auswerteeinrichtungen 50, 150 können weiterhin eine Masse m des Anhängers 92 aus dem Kraftsignal 33 ermitteln, wofür die eingangs erläuterte Methode bevorzugt ist.

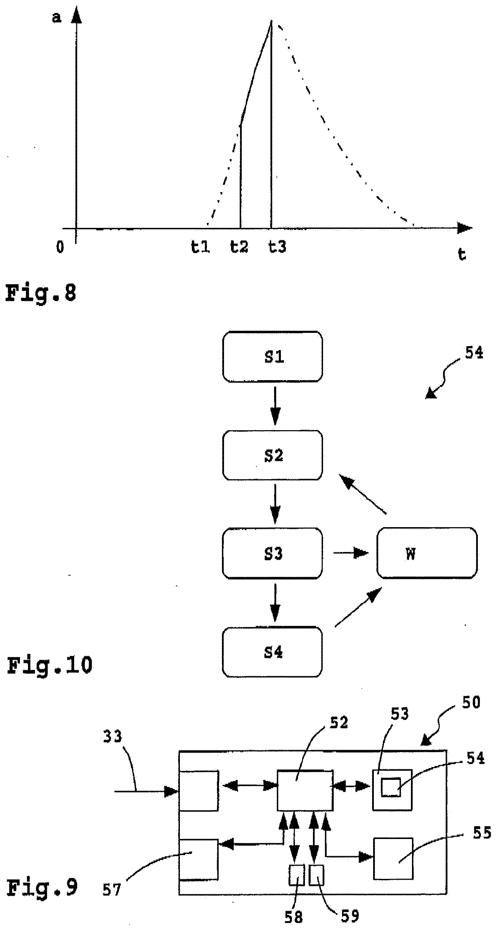

Beispielsweise arbeiten die Auswerteeinrichtungen 50, 51 wie folgt, wobei Das in Figur 9 dargestellte Block schalt Bild exemplarisch für beide Auswerteeinrichtung 50, 150 steht.

Die Auswerteeinrichtung 50 umfasst beispielsweise einen Prozessor 52 und einen Speicher 53, in dem ein Auswertemodul 54 gespeichert ist. Figur 10 zeigt einen vereinfachten Programmablauf des Auswertemoduls 54, dessen Befehle vom Prozessor 52 ausführbar sind, um anhand des Kraftsignals 33 die Stützlast Fz und insbesondere die Masse m des Anhängers 92 zu ermitteln.

In einem Schritt S1 initialisiert das Auswertemodul 54 den Kraftsensor 30 sowie einen Beschleunigungssensor 55. Der Beschleunigungssensor 55 ist an Bord der Auswerteeinrichtung 50.

Die Initialisierung in dem Schritt S1 sieht vorzugsweise vor, dass die Auswerteeinrichtung 50 oder 150 bzw. das Auswertemodul 54 auch eine Temperaturmessung durchführt, da die Temperatur im Heckbereich des Zugfahrzeugs 90 beispielsweise durch Abgase stark schwankt. Hierfür kann beispielsweise ein Temperatursensor 58 an Bord der Auswerteeinrichtung 50 oder 150 vorgesehen sein.

Eine bevorzugte Ausführungsform sieht jedoch vor, dass die Auswerteeinrichtung 50 oder 150 bei noch unbelasteter Anhängekupplung 10 oder 110 zunächst einen Anfangswert des Kraftsensors 36 ermittelt, sozusagen einen Basiswert bei einer gegebenen Temperatur. Ausgehend von diesem Basiswert ändert sich dann das Kraftsignal 33 bei Belastung der Anhängekupplung 10 oder 110, wenn der Anhänger angehängt ist, also eine Kraft auf den Kuppelträger 14 oder 114 ausübt.

In einem Schritt S2 erkennt das Auswertemodul 54, dass das Zugfahrzeug 90 steht. Der Beschleunigungssensor 55 ermittelt nämlich keinerlei Beschleunigung a. Beispielsweise beobachtet das Auswertemodul 54 über längere Zeit, ob sich die Beschleunigung des Zugfahrzeugs 90 ändert. Ist dies nicht der Fall, repräsentiert das Kraftsignal 33 also im Wesentlichen die Stützlast Fz, so dass das Auswertemodul 54 zwischen einem Zeitpunkt t = 0 und einem Zeitpunkt t1 die Stützlast Fz ermittelt.

Der Beschleunigungssensor 55 ist vorzugsweise dazu ausgestaltet, nicht nur die in X-Richtung wirkende Beschleunigung a, die man eigentlich als Beschleunigung ax bezeichnen könnte, sondern auch die in Y-Richtung und in Z-Richtung wirkenden Beschleunigungen ay und az zu ermitteln. Anhand der Beschleunigungswerte ax, ay und az ist der Beschleunigungssensor 55 und/oder die Auswerteeinrichtung 50, 150 dazu in der Lage, einen Neigungswinkel θ zu ermitteln, in welchem das Zugfahrzeug 90 bezüglich der X-Richtung relativ zu einem Untergrund U steht, also z.B. hangabwärts oder hangaufwärts. Wenn das Zugfahrzeug 90 auf einem horizontalen, ebenen Untergrund steht, wirkt an sich nur eine Kraft in Z-Richtung auf den Kuppelträger 14, 114, nämlich die Erdbeschleunigung g. Die Bestimmung des Neigungswinkels θ erfolgt zweckmäßigerweise bei stehendem zugfahrzeug 90.

Es kann aber auch ein Neigungssensor 59 an Bord der Auswerteeinrichtung 50, 150 vorgesehen sein.

In einem Schritt S3 erkennt das Auswertemodul 54 eine Beschleunigung a des Zugfahrzeugs 90, die zum Zeitpunkt t1 beginnt. Dann beendet das Auswertemodul 54 die Ermittlung der Stützlast Fz.

Allerdings ist die Beschleunigung zum Zeitpunkt t1 noch relativ gering. Erreicht jedoch die Beschleunigung a zu einem Zeitpunkt t2 einen Wert a1, erkennt das Auswertemodul 54 eine signifikante Beschleunigung, die zur Ermittlung der Masse m des Anhängers 92 geeignet ist. Vorteilhaft unter Verwendung der Formeln (1) bis (8) läuft dann in einem Schritt S4 ein Algorithmus zur Anhängermasseerkennung ab, in dessen Rahmen die Auswerteeinrichtung 50, zweckmäßigerweise unter Berücksichtigung der vorher bereits ermittelten und im Speicher 53 zwischengespeicherten Stützlast Fz, die Masse m des Anhängers 92. Auch die Masse m wird zweckmäßigerweise im Speicher 53 gespeichert.

Es ist vorteilhaft, wenn das Auswertemodul 54 im Schritt S3 den Wert für den Neigungswinkel, beispielsweise entsprechend der Formel (9) und/oder den anfangs ermittelten Temperatur-Basiswert des Kraftsignals (33) berücksichtigt.

Der Schritt S4 endet jedenfalls zu einem Zeitpunkt t3, wenn nämlich bei Erreichen eines Beschleunigungswerts a2 die Beschleunigung des Zugfahrzeugs 90 endet und/oder das Zugfahrzeug 90 eine Grenz-Geschwindigkeit überschreitet, bei der beispielsweise Rollwiderstandseinflüsse und/oder Luftwiderstandseinflüsse so signifikant ansteigen, dass eine zuverlässige Massenerkennung nicht mehr ohne weiteres möglich ist.

weiterhin umfasst das Ablaufdiagramm gemäß Figur 10 noch einen Zustand w, nämlich warten, in den das Auswertemodul 54 geht, bis das Zugfahrzeug 90 wieder zum Stehen gekommen ist.

Die Auswerteeinrichtung 50 zeigt beispielsweise die Stützlast und/oder die Masse m des Anhängers 92 an einem Display 56 an. Es aber auch möglich, dass die Auswerteeinrichtung 50 über eine Bus-Schnittstelle 57 mit dem Bordnetz 93 des Zugfahrzeugs 90 verbunden ist, beispielsweise um Beschleunigungswerte zu empfangen und/oder von ihr ermittelte Werte für die Stützlast und/oder die Masse des Anhängers und/oder die Zuglast an das Bordnetz 93 zu übertragen, so dass beispielsweise ein elektronisches Stabilisierungsprogramm anhand der so erhaltenen Werte die Fahrstabilität des Zugfahrzeugs 90 regeln kann und/oder die Werte an einem Display, zum Beispiel im Armaturenbereich des Zugfahrzeugs 90 angezeigt werden können.

Zur Verbesserung einer Mess- und/oder Rechengenauigkeit können selbstverständlich weitere Kraftsensoren an den Halterungen 11, 111 und/oder den Kuppelträgern 14, 114 vorgesehen sein. Ferner können auch im wesentlichen für eine dedizierte Stützlasterfassung oder eine dedizierte Zugkrafterfassung vorgesehene Kraftsensoren vorteilhaft sein, z.B. ein Kraftsensor 36 an dem sich bei Zugkraft-Beanspruchung des Kuppelträgers 14 verformenden Verformungsbereich 42. Der Verformungsbereich 42 verformt sich bei Stützlast-Belastung nur unwesentlich, so dass sein Kraftsignal im Wesentlichen die Zuglast repräsentiert und von den Auswerteeinrichtung 50, 150 entsprechend ausgewertet werden kann.

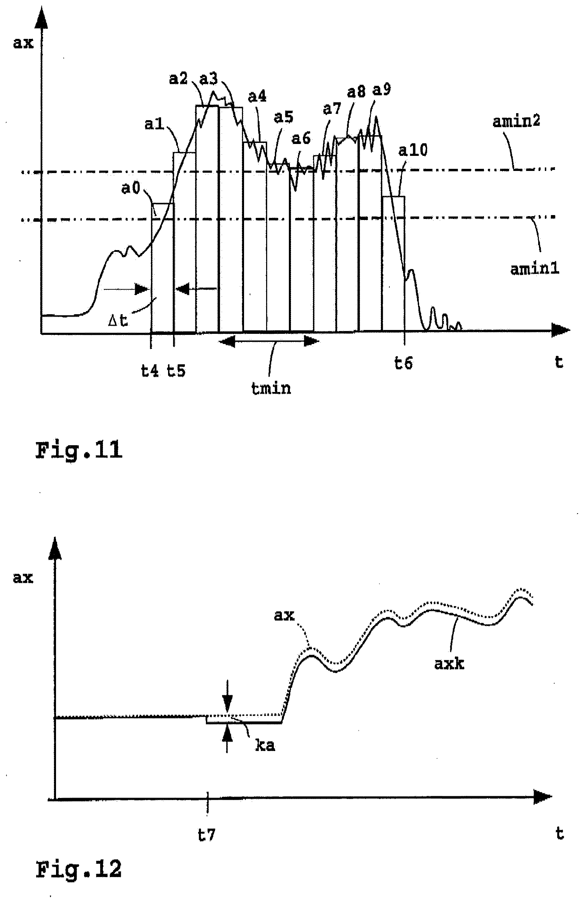

Anhand Figur 11 wird eine weitere, optimierte Auswerte-Logik der Auswerteeinrichtung 50 oder 150 erläutert.

Die Auswerteeinrichtung 50 oder 150 bildet jeweils Zwischen-Mittelwerte a0 bis a10 des in X-Richtung relevanten Beschleunigungswerts ax. Somit wird also nicht jede kleine Änderung des Beschleunigungswerts ax betrachtet, sondern ein jeweils eine über eine kurze Zeitspanne Δt von beispielsweise 0,1 s oder 0,2 s gebildeter Zwischen-Mittelwert. Andererseits wird der Mittelwert nicht über eine sehr lange Zeitspanne gebildet, beispielsweise zwischen den Zeitpunkten t4 und t6. Es handelt sich also um eine Art Blockbildung oder Sampling-Verfahren.

Die Auswerteeinrichtung 50, 150 beginnt beispielsweise mit der Ermittlung der Anhängermasse m zu einem Zeitpunkt t4, bei dem der Zwischen-Mittelwert a0 des in X-Richtung relevanten Beschleunigungswerts ax einen Mindest-Beschleunigungswert amin1 überschritten hat.

Beispielsweise ist der Zwischen-Mittelwert a0 zwar schon oberhalb des Mindest-Beschleunigungswerts amin1, aber noch unterhalb eines weiteren Mindest-Beschleunigungswerts amin2. Beim Zeitpunkt t4 beginnt also die Auswertung bzw. Ermittlung des Anhänger-Massewerts m noch nicht, die Auswerteeinrichtung 50, 150 ist aber dazu bereit.

Ab einem Zeitpunkt t5 sind die Zwischen-Mittelwerte a1 bis a9 oberhalb des oberen Mindest-Beschleunigungswerts amin2, vom Zeitpunkt t6 hingegen wieder unterhalb dieser Schwelle. Beispielsweise ist der Zwischen-Mittelwert a10 zwar noch oberhalb der unteren Mindestschwelle amin1, jedoch nicht mehr oberhalb der oberen Mindestschwelle amin2.

Die Auswerteeinrichtung 50 oder 150 wählt von denen Zwischen-Mittelwerten a1-a9 mehrere aufeinander folgende Zwischen-Mittelwerte aus, allerdings nur, wenn mindestens 3 oder 4 aufeinanderfolgende Zwischen-Mittelwerte a1-a9 die obere Mindestschwelle amin2 überschritten hatten. Dies ist im Prinzip eine andere Formulierung dafür, dass die Dauer einer auszuwertenden Fahrt des Zugfahrzeugs 90 eine Mindestdauer von beispielsweise tmin haben sollte. In Figur 11 ist tmin über beispielsweise 4 der Blöcke bzw. Zwischen-Mittelwerte a1-a9 exemplarisch eingezeichnet. Selbstverständlich kann die Mindestdauer tmin auch anders gewählt sein, zum Beispiel kleiner oder größer, so dass sie sich beispielsweise vollständig zwischen den Zeitpunkten t5 und t6 erstreckt.

In Figur 12 ist ein Verlauf des Beschleunigungswerts ax dargestellt, den der Beschleunigungssensor 55 in X-Richtung erfasst. Das Zugfahrzeug 90 steht jedoch schräg, beispielsweise hangaufwärts. Zu einem Zeitpunkt t7 korrigiert die Auswerteeinrichtung 50 oder 150 den Beschleunigungswert ax und generiert einen auf das Zugfahrzeug 90 bezogenen Beschleunigungswert axk, bei dem der Einfluss des Neigungswinkels θ in X-Richtung korrigiert ist. Der Beschleunigungssensor 55 ist zweckmäßigerweise dazu ausgestaltet, die in X-, Y- und Z-Richtung wirkende Erdbeschleunigung g zu ermitteln und die Auswerteeinrichtung 50 ermittelt daraus den Neigungswinkel θ.

Bei den sich daran anschließenden Auswertungen, die bereits erläutert worden sind, legt die Auswerteeinrichtung 50, 150 zweckmäßigerweise den korrigierten Beschleunigungswert axk zu Grunde (siehe beispielsweise Formel (9)).

## Patentansprüche

1. Anhängekupplung für ein Zugfahrzeug (90), mit einem einen Kupplungsarm umfassenden Kuppelträger (14; 114), an dessen freiem Ende ein Kuppelelement (23), insbesondere eine Kupplungskugel (22), zum Anhängen eines Anhängers (92) angeordnet ist und der an einer am Zugfahrzeug (90) befestigbaren Halterung (11; 111) fest oder beweglich angeordnet ist, und mit mindestens einem Kraftsensor (30) zur Erfassung einer durch bei einem Zugbetrieb des Anhängers (92) auf das Kuppelelement (23) wirkenden Zuglast (Fx) verursachbaren Zugkraft und/oder Schubkraft und zur Ausgabe eines die Zugkraft und/oder Schubkraft repräsentierenden Kraftsignals (33), und wobei eine Auswerteeinrichtung (50; 150) vorgesehen ist, die zur Ermittlung eines Anhänger-Massewerts des Anhängers (92) anhand des Kraftsignals (33) und eines Beschleunigungswerts ausgestaltet ist, **dadurch gekennzeichnet, dass** der Kupplungsarm mehrere Krümmungen (25, 27) oder Winkel aufweist, und dass die Auswerteeinrichtung (50; 150) dazu ausgestaltet ist, eine Kompensationsmessung bei noch unbelastetem Kuppelträger (14; 114) durchzuführen und anhand eines dabei erzeugten, die Zugkraft und/oder Schubkraft und/oder eine auf den Kuppelträger (14; 114) einwirkende Stützlast repräsentierenden Kraftsignals (33) einen Basiswert zu ermitteln, welcher bei der danach erfolgenden Ermittlung des Anhänger-Massewerts des Anhängers (92) zur Temperaturkompensation dient.

2. Anhängekupplung nach Anspruch 1, **dadurch gekennzeichnet, dass** die Auswerteeinrichtung (50; 150) einen Signaleingang für ein Beschleunigungssignal und/oder für einen Neigungswinkel-Wert aufweist.

3. Anhängekupplung nach Anspruch 1 oder 2, **dadurch gekennzeichnet, dass** die Auswerteeinrichtung (50; 150) einen Beschleunigungssensor (55) und/oder einen Temperatursensor und/oder einen Neigungssensor umfasst.

4. Anhängekupplung nach einem der vorhergehenden Ansprüche, **dadurch gekennzeichnet, dass** die Auswerteeinrichtung (50; 150) dazu ausgestaltet ist, von dem Beschleunigungssensor (55) erzeugte Beschleunigungswerte in zueinander winkeligen Koordinatenachsen, insbesondere in einer X-Richtung, einer Y-Richtung und einer Z-Richtung, zur Ermittlung eines Neigungswinkels des Kuppelträgers oder des Zugfahrzeugs (90) auszuwerten.

5. Anhängekupplung nach einem der vorhergehenden Ansprüche, **dadurch gekennzeichnet, dass** die Auswerteeinrichtung (50; 150) eine Daten-Schnittstelle, insbesondere eine Bus-Schnittstelle (57) für einen Daten-Bus des Zugfahrzeugs (90), aufweist, wobei zweckmäßigerweise der Beschleunigungswert über die Daten-Schnittstelle oder Bus-Schnittstelle (57) empfangbar ist.

6. Anhängekupplung nach einem der vorhergehenden Ansprüche, **dadurch gekennzeichnet, dass** die Auswerteeinrichtung (50; 150) den Anhänger-Massewert in Abhängigkeit von einer Fahrgeschwindigkeit des Zugfahrzeugs (90), insbesondere erst bei Überschreiten eines unteren Geschwindigkeitsgrenzwerts und/oder bis zum Erreichen eines oberen Geschwindigkeitsgrenzwertes, ermittelt.

7. Anhängekupplung nach einem der vorhergehenden Ansprüche, **dadurch gekennzeichnet, dass** die Auswerteeinrichtung (50; 150) das Kraftsignal (33) bei Vorliegen eines Mindest-Beschleunigungswerts und/oder bis zum Erreichen eines Maximal-Beschleunigungswerts zur Ermittlung des Anhänger-Massewerts oder der Stützlast (Fz) auswertet.

8. Anhängekupplung nach einem der vorhergehenden Ansprüche, **dadurch gekennzeichnet, dass** die Auswerteeinrichtung (50; 150) das Kraftsignal (33) während einer Zeitdauer (t2-t3) kontinuierlich ansteigender Beschleunigungswerte oder kontinuierlich abfallender Beschleunigungswerte oder während einer Phase zwischen Änderungen der Beschleunigungswerte als ein die an der Anhängekupplung (10, 110) angreifende Zugkraft und/oder Schubkraft repräsentierendes Signal auswertet.

9. Anhängekupplung nach einem der vorhergehenden Ansprüche, **dadurch gekennzeichnet, dass** die Auswerteeinrichtung (50; 150) zu einer Mittelwertbildung der Beschleunigungswerte, insbesondere zu einer Bildung und Auswertung von Zwischen-Mittelwerten (a1-a9) der Beschleunigungswerte, ausgestaltet ist.

**10.** Anhängekupplung nach einem der vorhergehenden Ansprüche, **dadurch gekennzeichnet, dass** die Auswerteeinrichtung (50; 150) bei der Ermittlung des Anhänger-Massewerts des Anhängers (92) eine Stützlast (Fz) auswertet, die der Anhänger (92) auf die Anhängekupplung (10, 110) ausübt.

**11.** Anhängekupplung nach einem der vorhergehenden Ansprüche, **dadurch gekennzeichnet, dass** das Kraftsignal (33) des mindestens einen Kraftsensors (30) eine an der Anhängekupplung (10, 110) angreifende Stützlast (Fz) und eine an der Anhängekupplung (10, 110) angreifende Zuglast (Fx) repräsentiert, wobei die Auswerteeinrichtung (50; 150) zur Auswertung des Kraftsignals (33) zur Ermittlung der Stützlast (Fz) und zur Ermittlung der Zuglast (Fx) in Abhängigkeit von einem Fahrzustand des Zugfahrzeugs (90) ausgestaltet ist.

**12.** Anhängekupplung nach einem der vorhergehenden Ansprüche, **dadurch gekennzeichnet, dass** der mindestens eine Kraftsensor (30) einen auf Druck- und/oder Zug empfindlichen Verformungssensor (35) umfasst, der an einem an dem Kuppelträger (14; 114) oder der Halterung (11; 111) vorgesehenen Anbringungsort (32; 132) angeordnet ist, an dem eine Dehnungsverformung und/oder Stauchungsverformung aufgrund einer auf die Anhängekupplung (10, 110) einwirkenden, durch den Anhänger (92) verursachten Kraft messbar ist, wobei der Anbringungsort (32; 132) so gewählt ist, dass an dem Anbringungsort (32; 132) eine durch eine bei einem Zugbetrieb des Anhängers (92) auf das Kuppelelement (23) wirkende Zuglast (Fx) verursachbare Verformung zur Betätigung des mindestens einen Kraftsensors (30) vorhanden ist und eine durch eine auf die Anhängekupplung (10, 110) wirkende Stützlast (Fz) des Anhängers (92) verursachbare Verformung zur Betätigung des mindestens einen Kraftsensors (30) vorhanden ist.

**13.** Verfahren zur Ermittlung eines Anhänger-Massewerts eines Anhängers (92) anhand einer Anhängekupplung (10, 110) für ein Zugfahrzeug (90), wobei die Anhängekupplung (10, 110) einen einen Kupplungsarm umfassenden Kuppelträger (14; 114), an dessen freiem Ende ein Kuppelelement (23), insbesondere eine Kupplungskugel (22), zum Anhängen eines Anhängers (92) angeordnet ist und der an einer am Zugfahrzeug (90) befestigten oder befestigbaren Halterung (11; 111) fest oder beweglich angeordnet ist, und mindestens einen Kraftsensor (30) zur Erfassung einer durch bei einem Zugbetrieb des Anhängers (92) auf das Kuppelelement (23) wirkende Zuglast (Fx) verursachbaren Zugkraft und/oder Schubkraft und zur Ausgabe eines die Zugkraft und/oder Schubkraft repräsentierenden Kraftsignals (33) aufweist, wobei das Verfahren eine Ermittlung eines Anhänger-Massewerts des Anhängers (92) anhand des Kraftsignals (33) und eines Beschleunigungswerts aufweist, **gekennzeichnet durch** Durchführung des Verfahrens mit einer solchen Anhängekupplung, deren Kupplungsarm mehrere Krümmungen (25, 27) oder Winkel aufweist, wobei das Verfahren vorsieht, dass eine Auswerteeinrichtung (50; 150) eine Kompensationsmessung bei noch unbelastetem Kuppelträger (14; 114) durchführt und anhand eines dabei erzeugten, die Zugkraft und/oder Schubkraft und/oder eine auf den Kuppelträger (14; 114) einwirkende Stützlast repräsentierenden Kraftsignals (33) einen Basiswert ermittelt, welcher bei der danach erfolgenden Ermittlung des Anhänger-Massewerts des Anhängers (92) zur Temperaturkompensation dient.

**Claims**

**1.** Trailer coupling for a towing vehicle (90) with a coupling support (14; 114) including a coupling arm, at the free end of which is arranged a coupling element (23), in particular a coupling ball (22), for attaching a trailer (92) and which is mounted movably or immovably on a mounting (11; 111) which may be fixed to the towing vehicle (90), and with at least one force sensor (30) for detecting a tensile force and/or thrust force which may be caused by a tensile load (Fx) acting on the coupling element (23) during towing of the trailer (92), and for the output of a force signal (33) representing the tensile force and/or thrust force, and wherein there is provided an evaluation unit (50; 150) which is designed to determine a trailer mass value of the trailer (92) with the aid of the force signal (33) and an acceleration value, **characterised in that** the coupling arm has several curves (25, 27) or angles and **in that** the evaluation unit (50; 150) is designed to carry out a compensation measurement with the coupling support (14; 114) as yet unloaded and, with the aid of a force signal (33) thereby generated and representing the tensile force and/or the thrust force and/or a support load acting on the coupling support (14; 114), to determine a base value which is used for temperature compensation in the subsequent determination of the trailer mass value of the trailer (92).

**2.** Trailer coupling according to claim 1, **characterised in that** the evaluation unit (50; 150) has a signal input for an acceleration signal and/or for a tilt angle value.

**3.** Trailer coupling according to claim 1 or 2, **characterised in that** the evaluation unit (50; 150) includes an acceleration sensor (55) and/or a temperature sensor and/or a tilt sensor.

4. Trailer coupling according to any of the preceding claims, **characterised in that** the evaluation unit (50; 150) is designed to evaluate acceleration values generated by the acceleration sensor (55) in coordinate axes at an angle to one another, in particular in an X-direction, a Y-direction and a Z-direction, to determine an angle of tilt of the coupling support or the towing vehicle (90).

5. Trailer coupling according to any of the preceding claims, **characterised in that** the evaluation unit (50; 150) has a data interface, in particular a bus interface (57), for a data bus of the towing vehicle (90), wherein expediently the acceleration value may be received via the data interface or the bus interface (57).

6. Trailer coupling according to any of the preceding claims, **characterised in that** the evaluation unit (50; 150) determines the trailer mass value on the basis of a driving speed of the towing vehicle (90), in particular only on exceeding a lower speed limit value and/or on reaching an upper speed limit value.

7. Trailer coupling according to any of the preceding claims, **characterised in that** the evaluation unit (50; 150) evaluates the force signal (33) in the presence of a minimum acceleration value and/or up to the reaching of a maximum acceleration value, to determine the trailer mass value or the support load (Fz).

8. Trailer coupling according to any of the preceding claims, **characterised in that** the evaluation unit (50; 150), during a period of time (t2-t3) of continuously rising acceleration values or continuously falling acceleration values or during a phase between changes in acceleration values, evaluates the force signal (33) as a signal representing the tensile force and/or thrust force acting on the trailer coupling (10, 110).

9. Trailer coupling according to any of the preceding claims, **characterised in that** the evaluation unit (50; 150) is designed to form an average of the acceleration values, in particular to form and evaluate intermediate averages (a1 - a9) of the acceleration values.

10. Trailer coupling according to any of the preceding claims, **characterised in that** the evaluation unit (50; 150) , in determining the trailer mass value of the trailer (92), evaluates a support load (Fz) which the trailer (92) exerts on the trailer coupling (10; 110).

11. Trailer coupling according to any of the preceding claims, **characterised in that** the force signal (33) of the force sensor or sensors (30) represents a support load (Fz) acting on the trailer coupling (10; 110) and a tensile load (Fx) acting on the trailer coupling (10; 110), wherein the evaluation unit (50; 150) is designed to evaluate the force signal (33) to determine the support load (Fz), and to determine the tensile load (Fx) on the basis of a driving status of the towing vehicle (90).

12. Trailer coupling according to any of the preceding claims, **characterised in that** the force sensor or sensors (30) includes or include a deformation sensor (35) sensitive to compression and/or tension and mounted at a point of attachment (32; 132) provided on the coupling support (14; 114) or the mounting (11; 111), at which a tensile strain deformation and/or compression deformation due to a force acting on the trailer coupling (10; 110) due to the trailer (92) may be measured, wherein the point of attachment (32; 132) is so chosen that, at the point of attachment (32; 132), there is a deformation which may be caused by a tensile load (Fx) acting on the coupling element (23) during towing of the trailer (92), for actuating the force sensor or sensors (30), and a deformation which may be caused by a support load (Fz) of the trailer (92) acting on the trailer coupling (10; 110), for actuating the force sensor or sensors (30).

13. Method of determining a trailer mass value of a trailer (92) with the aid of a trailer coupling (10; 110) for a towing vehicle (90), wherein the trailer coupling (10; 110) has a coupling support (14; 114) including a coupling arm, at the free end of which is arranged a coupling element (23), in particular a coupling ball (22), for attaching a trailer (92) and which is mounted movably or immovably on the mounting (11; 111) which is or may be fixed to the towing vehicle (90), and with at least one force sensor (30) for detecting a tensile force and/or thrust force which may be caused by a tensile load (Fx) acting on the coupling element (23) during towing of the trailer (92), and for the output of a force signal (33) representing the tensile force and/or thrust force, wherein the method has a determination of a trailer mass value of the trailer (92) with the aid of the force signal (33) and an acceleration value, **characterised by** implementation of the method with a trailer coupling, the coupling arm of which has several curves (25, 27) or angles, wherein the method provides that an evaluation device (50, 150) carries out a compensation measurement with the coupling support (14; 114) as yet unloaded and, with the aid of a force signal (33) thereby generated and representing the tensile force and/or the thrust force and/or a support load acting on the coupling support (14; 114), determines a base value which is used for temperature compensation in the subsequent determination of the trailer mass value of the trailer (92).

**Revendications**

1. Attelage de remorque pour un véhicule de traction (90), avec un support d'accouplement (14 ; 114) comprenant un bras d'attelage, au niveau de l'extrémité libre duquel un élément d'accouplement (23), en particulier une boule d'attelage (22), servant à accrocher une remorque (92) est disposé et qui est disposé de manière fixe ou mobile au niveau d'une console (11 ; 111) pouvant être fixée au véhicule de traction (90), et avec au moins un capteur de force (30) servant à détecter une force de traction et/ou une force de poussée pouvant être provoquées par une charge de traction (Fx) agissant lors d'un mode de traction de la remorque (92) sur l'élément d'accouplement (23) et servant à envoyer un signal de force (33) représentant la force de traction et/ou la force de poussée, et dans lequel est prévu un système d'évaluation (50 ; 150), qui est configuré pour déterminer une valeur massique de remorque de la remorque (92) à l'aide du signal de force (33) et d'une valeur d'accélération, **caractérisé en ce que** le bras d'attelage présente plusieurs incurvations (25, 27) ou angles, et que le système d'évaluation (50 ; 150) est configuré pour mettre en oeuvre une mesure de compensation lorsque le support d'accouplement (14 ; 114) n'est pas encore contraint et pour déterminer, à l'aide d'un signal de force (33) généré dans ce cadre, représentant la force de traction et/ou la force de poussée et/ou une charge d'appui agissant sur le support d'accouplement (14 ; 114), une valeur de base, laquelle sert à la compensation de température lors de la détermination effectuée par la suite de la valeur massique de remorque de la remorque (92).

2. Attelage de remorque selon la revendication 1, **caractérisé en ce que** le système d'évaluation (50 ; 150) présente une entrée de signal pour un signal d'accélération et/ou pour une valeur d'angle d'inclinaison.

3. Attelage de remorque selon la revendication 1 ou 2, **caractérisé en ce que** le système d'évaluation (50 ; 150) comprend un capteur d'accélération (55) et/ou un capteur de température et/ou un capteur d'inclinaison.

4. Attelage de remorque selon l'une quelconque des revendications précédentes, **caractérisé en ce que** le système d'évaluation (50 ; 150) est configuré pour évaluer des valeurs d'accélération générées par le capteur d'accélération (55) dans des axes de coordonnées formant un angle les uns par rapport aux autres, en particulier dans une direction X, une direction Y et une direction Z, pour déterminer un angle d'inclinaison du support d'accouplement ou du véhicule de traction (90).

5. Attelage de remorque selon l'une quelconque des revendications précédentes, **caractérisé en ce que** le système d'évaluation (50 ; 150) présente une interface de données, en particulier une interface de bus (57) pour un bus de données du véhicule de traction (90), dans lequel de manière opportune la valeur d'accélération peut être reçue par l'intermédiaire de l'interface de données ou de l'interface de bus (57).

6. Attelage de remorque selon l'une quelconque des revendications précédentes, **caractérisé en ce que** le système d'évaluation (50 ; 150) détermine la valeur massique de remorque en fonction d'une vitesse de déplacement du véhicule de traction (90), en particulier seulement en cas de dépassement d'une valeur limite de vitesse inférieure et/ou jusqu'à atteindre une valeur limite de vitesse supérieure.

7. Attelage de remorque selon l'une quelconque des revendications précédentes, **caractérisé en ce que** le système d'évaluation (50 ; 150) évalue le signal de force (33) en présence d'une valeur d'accélération minimale et/ou jusqu'à atteindre une valeur d'accélération maximale pour déterminer la valeur massique de remorque ou la charge d'appui (Fz).

8. Attelage de remorque selon l'une quelconque des revendications précédentes, **caractérisé en ce que** le système d'évaluation (50 ; 150) évalue le signal de force (33) pendant une durée (t2-t3) de valeurs d'accélération augmentant en continu ou de valeurs d'accélération diminuant en continu ou pendant une phase entre des modifications des valeurs d'accélération en tant qu'un signal représentant la force de traction et/ou la force de poussée s'engageant au niveau de l'attelage de remorque (10, 110).

9. Attelage de remorque selon l'une quelconque des revendications précédentes, **caractérisé en ce que** le système d'évaluation (50 ; 150) est configuré pour l'obtention de valeur moyenne des valeurs d'accélération, en particulier pour une obtention et évaluation de valeurs moyennes intermédiaires (a1-a9) des valeurs d'accélération.

**10.** Attelage de remorque selon l'une quelconque des revendications précédentes, **caractérisé en ce que** le système d'évaluation (50 ; 150) évalue, lors de la détermination de la valeur massique de remorque de la remorque (92), une charge d'appui (Fz), que la remorque (92) exerce sur l'attelage de remorque (10, 110).

**11.** Attelage de remorque selon l'une quelconque des revendications précédentes, **caractérisé en ce que** le signal de force (33) de l'au moins un capteur de force (30) représente une charge d'appui (Fz) s'engageant au niveau de l'attelage de remorque (10, 110) et une charge de traction (Fx) s'engageant au niveau de l'attelage de remorque (10, 110), dans lequel le système d'évaluation (50 ; 150) est configuré pour évaluer le signal de force (33) pour déterminer la charge d'appui (Fz) et pour déterminer la charge de traction (Fx) en fonction d'un état de déplacement du véhicule de traction (90).

**12.** Attelage de remorque selon l'une quelconque des revendications précédentes, **caractérisé en ce que** l'au moins un capteur de force (30) comprend un capteur de déformation (35) sensible à la pression et/ou à la traction, qui est disposé au niveau d'un emplacement de mise en place (32 ; 132) prévu au niveau du support d'accouplement (14 ; 114) ou de la console (11 ; 111), au niveau duquel une déformation d'extension et/ou une déformation de compression peuvent être mesurées du fait d'une force agissant sur l'attelage de remorque (10, 110), provoquée par la remorque (92), dans lequel l'emplacement de mise en place (32 ; 132) est choisi de telle sorte qu'une déformation pouvant être provoquée par une charge de traction (Fx) agissant lors d'un mode de traction de la remorque (92) sur l'élément d'accouplement (23) est présente au niveau de l'emplacement de mise en place (32 ; 132) pour actionner l'au moins un capteur de force (30) et une déformation pouvant être provoquée par une charge d'appui (Fz), agissant sur l'attelage de remorque (10, 110), de la remorque (92) est présente pour actionner l'au moins un capteur de force (30).

**13.** Procédé servant à déterminer une valeur massique de remorque d'une remorque (92) à l'aide d'un attelage de remorque (10, 110) pour un véhicule de traction (90), dans lequel l'attelage de remorque (10, 110) présente un support d'accouplement (14 ; 114) comprenant un bras d'attelage, au niveau de l'extrémité libre duquel est disposé un élément d'accouplement (23), en particulier une boule d'attelage (22), pour accrocher une remorque (92) et qui est disposé de manière fixe ou mobile au niveau d'une console (11 ; 111) fixée ou pouvant être fixée au véhicule de traction (90), et au moins un capteur de force (30) servant à détecter une force de traction et/ou une force de poussée pouvant être provoquée par une charge de traction (Fx) agissant lors d'un mode de traction de la remorque (92) sur l'élément d'accouplement (23) et servant à envoyer un signal de force (33) représentant la force de traction et/ou la force de poussée, dans lequel le procédé présente une détermination d'une valeur massique de remorque de la remorque (92) à l'aide du signal de force (33) et d'une valeur d'accélération, **caractérisé par** la mise en oeuvre du procédé avec un tel attelage de remorque, dont le bras d'attelage présente plusieurs incurvations (25, 27) ou angles, dans lequel le procédé prévoit qu'un système d'évaluation (50 ; 150) met en oeuvre une mesure de compensation lorsque le support d'accouplement (14 ; 114) n'est pas encore contraint et détermine, à l'aide d'un signal de force (33) généré dans ce cadre, représentant la force de traction et/ou la force de poussée et/ou une charge d'appui agissant sur le support d'accouplement (14 ; 114), une valeur de base, laquelle sert à la compensation de température lors de la détermination effectuée par la suite de la valeur massique de remorque de la remorque (92).

EP 3 357 717 B2

Fig.1

Fig.2

16

**Fig.3**

**Fig.4**

Fig.5

Fig.6

Fig.7

Fig.8

Fig.10

Fig.9

Fig.11

Fig.12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100332049 A1
- DE 102010009986 A1